# EUROPEAN PATENT APPLICATION

(11) **EP 4 516 480 A1**
(43) Date of publication of application: **05.03.2025**
(21) Application number: 24198227.1
(22) Date of filing: 03.09.2024
(51) Int. Cl.: B29C 45/76

(54) **EXTERNAL SIGNAL CONTROL DEVICE AND MOLDING MACHINE**

(30) Priority: 04.09.2023 JP 2023143070
(71) Applicant: Toyo Machinery & Metal Co., Ltd., Akashi-shi, Hyogo 674-0091 (JP)
(72) Inventor: TARUYA, Koji, 674-0091 Hyogo (JP); OKA, Masaaki, 674-0091 Hyogo (JP)
(74) Representative: D Young & Co LLP

(57) **Abstract**

An external signal control device and a molding machine are provided that facilitate setting for connecting again an external device having been connected once. A control unit 7 is used for an injection molding machine. The control unit 7 has an optional output signal port OP1 to be connected to an external device, a storage device 73 to store control information of the optional output signal port OP1, and a control device 78. The control information includes signal port use information and output condition information. If the signal port use information is ON, the control device 78 controls the optional output signal port OP1 based on the output condition information, and if the signal port use information is OFF, controls the optional output signal port OP1 so as to cause the optional output signal port OP1 to not function.

## Description

### BACKGROUND OF THE INVENTION

### Field of the Invention

The present invention relates to an external signal control device configured to control a signal related to an external device and a molding machine having the same.

### Description of the Related Art

PTL 1 discloses an example of an injection molding machine in the past. The injection molding machine has signal ports to which external devices, such as a mold assembly and a molded article conveyor system, are connected. The signal ports are capable of outputting digital signals. The injection molding machine defines a signal of the signal ports as an H level (first signal) if a predetermined output condition is established in the molding operation and defines a signal of the signal ports as an L level (second signal) if the output condition is not established. The external devices operate in cooperation with the injection molding machine based on the signals of the signal ports. The control information, such as output conditions of the signal ports, is set using a predetermined setting screen.

Patent Literature (PTL) 1 refers to JP 2013-248834 A.

### SUMMARY OF THE INVENTION

For example, with a change in a mold and the like in accordance with the production plan, any of the external devices may be removed from the injection molding machine to cause the connection between the external device and the signal port to be released. In this case, output of a signal from the signal port not connected to any of the external devices is avoided by resetting the control information of the signal port. Thus, when the external device once released from the connection is connected to the signal port again, the control information of the signal port has to be set once more and the operations for connecting the external device to the signal port again are troublesome.

Accordingly, one or more embodiments of the present disclosure provide an external signal control device and a molding machine that facilitate setting for connecting again an external device having been connected once.

An external signal control device according to one or more embodiments of the present disclosure, the control device used for a molding machine includes: a signal port configured to be connected to an external device; a storage device configured to store control information of the signal port; and a signal port control device, wherein the control information includes a signal port use flag and condition information, and the signal port control device controls the signal port based on the condition information if the signal port use flag is ON, and controls the signal port so as to cause the signal port to not function if the signal port use flag is OFF.

According to the present invention, it is possible to cause the signal port to not function while the condition information is held in the storage device by turning OFF the signal port use flag if the connection between the external device and the signal port is released. It is also possible to control the signal port based on the condition information stored in the storage device by turning ON the signal port use flag if the external device is connected again to the signal port. Thus, the setting operations for connecting again the external device having been connected once are simplified.

### BRIEF DESCRIPTION OF THE DRAWINGS

Fig. 1 is a diagram illustrating a schematic configuration of an injection molding machine according to one embodiment of the present invention.
FIG. 2 is a function block diagram of the injection molding machine.
FIG. 3 is a diagram illustrating one example of control information of optional output signal ports.
FIG. 4 is a diagram illustrating one example of control information of valve gate output signal ports.
FIG. 5 is a diagram illustrating one example of control information of analog output signal ports.
FIG. 6 is a diagram illustrating one example of control information of optional input signal ports.
FIG. 7 is a diagram illustrating one example of a setting screen related to the optional output signal ports.
FIG. 8 is a diagram illustrating a control information setting section included in the setting screen in FIG. 7.
FIG. 9 is a diagram illustrating a selection screen displayed over the setting screen in FIG. 7.
FIG. 10 is a diagram illustrating another selection screen displayed over the setting screen in FIG. 7.
FIG. 11 is a diagram illustrating one example of a setting screen related to the valve gate output signal ports.
FIG. 12 is a diagram illustrating a control information setting section included in the setting screen of FIG. 11.
FIG. 13 is a diagram illustrating a selection screen displayed over the setting screen in FIG. 11.
FIG. 14 is a diagram illustrating another selection screen displayed over the setting screen in FIG. 11.
FIG. 15 is a diagram illustrating one example of a setting screen related to the analog output signal ports.
FIG. 16 is a diagram illustrating a control information setting section included in the setting screen of FIG. 15.
FIG. 17 is a diagram illustrating a selection screen displayed over the setting screen in FIG. 15.
FIG. 18 is a diagram illustrating one example of a setting screen related to the optional input signal ports.
FIG. 19 is a diagram illustrating a control information setting section included in the setting screen of FIG. 18.
FIG. 20 is a diagram illustrating a selection screen displayed over the setting screen in FIG. 18.

### DETAILED DESCRIPTION OF THE INVENTION

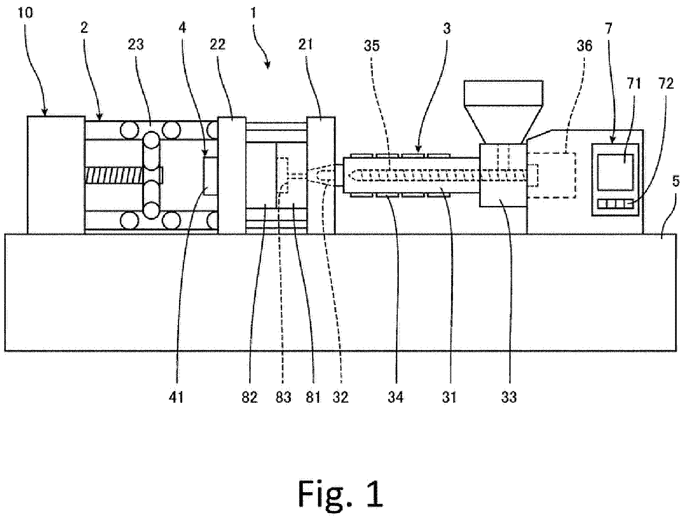

A description is given below to an injection molding machine according to one embodiment of the present invention with reference to FIGs. 1 through 20. The injection molding machine plasticizes a resin as a material for molded articles and injects into a cavity of a mold for molding the molded articles. The injection molding machine is connected to external devices (peripheral devices) that operate in cooperation with the injection molding machine in the operation of molding molded articles (molding operation).

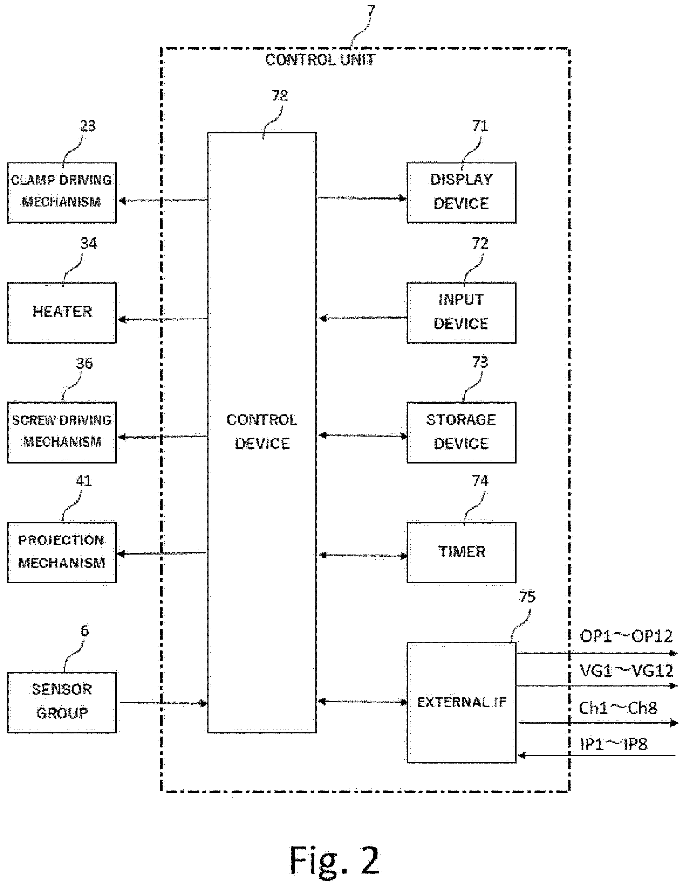

As illustrated in FIG. 1, an injection molding machine 1 according to the present embodiment has a molding machine body 10 including a clamping device 2, an injection device 3, and an ejection device 4. The molding machine body 10 is arranged on a base 5. The injection molding machine 1 also has a sensor group 6 (FIG. 2) arranged in the molding machine body 10 and a control unit 7 to control the molding machine body 10.

The clamping device 2 opens, closes, and clamps a fixed-side mold 81 and a movable-side mold 82. The fixed-side mold 81 and the movable-side mold 82 form a cavity 83. The fixed-side mold 81 is provided with a valve gate, not shown.

The clamping device 2 has a fixed die plate 21, a movable die plate 22, and a clamp driving mechanism 23. To the fixed die plate 21, the fixed-side mold 81 is attached. To the movable die plate 22, the movable-side mold 82 is attached. The clamp driving mechanism 23 has, for example, an electric motor, a ball screw mechanism, and a toggle link mechanism. The clamp driving mechanism 23 causes the fixed die plate 21 and the movable die plate 22 to clamp the fixed-side mold 81 and the movable-side mold 82 in a front-back direction (left-right direction in FIG. 1) and thus generates a clamping force.

The injection device 3 has a cylinder 31, a nozzle 32, a resin supply section 33, a heater 34, a screw 35, and a screw driving mechanism 36.

The cylinder 31 has a cylindrical shape. The cylinder 31 is arranged along the front-back direction. The nozzle 32 is arranged at a distal end of the cylinder 31. The resin supply section 33 is arranged at a rear end of the cylinder 31. The resin supply section 33 has a hopper to store a powder or granular resin as a material for molded articles. The resin supply section 33 supplies the resin to the cylinder 31. The heater 34 is, for example, a band heater and is arranged on an outer circumferential surface of the cylinder 31. The screw 35 is stored in the cylinder 31 rotatably and movably to the front and back. The screw driving mechanism 36 has, for example, an electric motor and a ball screw mechanism. The screw driving mechanism 36 causes the screw 35 to rotate and move forward and backward.

The ejection device 4 has an ejector pin, not shown, and a projection mechanism 41. The projection mechanism 41 has, for example, an air cylinder. The projection mechanism 41 drives the ejector pin to remove a molded article from the movable-side mold 82.

The sensor group 6 is configured with a plurality of sensors arranged in various portions of the molding machine body 10. The sensor group 6 includes, for example, sensors to detect the position and speed of the screw 35, a sensor to detect the rotational speed of the screw 35, sensors to detect the pressures (injection pressure, dwell pressure, back pressure) applied to the resin in the cylinder 31, a sensor to detect the amount of opening and closing of the mold, a sensor to detect the clamping pressure, a sensor to detect the pressure (internal mold pressure) applied to the resin in the cavity 83, a sensor to detect the amount of projection of the ejector pin, a sensor to detect the pressure applied to the ejector pin, sensors to detect temperatures in various portions of the molding machine body 10, a sensor to detect the power value, and the like.

The control unit 7 manages the entire operation of the injection molding machine 1. As illustrated in FIG. 2, the control unit 7 has a display device 71, an input device 72, a storage device 73, a timer 74, an external interface 75 (external IF), and a control device 78.

The display device 71 is, for example, a flat panel display, such as a liquid crystal display.

The input device 72 is, for example, an operation key and a touchscreen. The operation key is, for example, keys of a hardware keyboard. The touchscreen is arranged over a display surface of the display device 71 to configure software keys in combination with button graphics, slide switch graphics, and the like displayed on the display surface. Touching an area corresponding to one of the button graphics or the slide switch graphics on the touchscreen is equivalent to operating one of the software keys, that is, inputting an operation to the input device 72.

The storage device 73 is, for example, a magnetic disk device, a non-volatile memory, or the like. The storage device 73 holds information on molding conditions, data measured by the sensor group 6, and the like.

The external interface 75 has a plurality of signal ports. The plurality of signal ports include optional output signal ports OP (OP1 - OP12), valve gate output signal ports VG (VG1 - VG12), analog output signal ports Ch (Ch1 - Ch8), and optional input signal ports IP (IP1 - IP8). The optional output signal ports OP and the valve gate output signal ports VG output digital signals. To the optional input signal ports IP, digital signals are input. Such a digital signal is a voltage signal indicating either an H level (first signal) or an L level (second signal). Analog signals are voltage signals changing steplessly (including substantially steplessly) in a predetermined range of voltage. Such an analog signal changes in a range, for example, from 0 to 10 V.

The signal ports of the external interface 75 are connected to external devices. The external devices include a valve gate provided on the fixed-side mold 81, a conveyor system (not shown), such as a conveyor and a robot arm to convey molded articles removed from the movable-side mold 82, and the like. The external devices may also include a measuring instrument, such as an oscilloscope.

The control device 78 has a computer. The control device 78 is communicably connected to the display device 71, the input device 72, the storage device 73, the timer 74, and the external interface 75.

The control device 78 causes various kinds of information to be displayed on the display device 71 to operate in accordance with the operation input to the input device 72. Note that the display device 71 and the input device 72 may be, for example, a tablet device, a laptop computer, or the like connected to the control device 78 by wireless communication. The control device 78 is also connected to the sensor group 6.

The control device 78 is communicably connected to the clamp driving mechanism 23, the heater 34, the screw driving mechanism 36, and the projection mechanism 41. The control device 78 controls, in molding operations, the clamp driving mechanism 23, the heater 34, the screw driving mechanism 36, the projection mechanism 41, and the like. The control device 78 also measures a plurality of data items using the sensor group 6 and the timer 74 during execution of the molding operations.

The control device 78 controls the signal ports of the external interface 75 to cause the injection molding machine 1 to operate in cooperation with the external devices. Signals output from the signal ports and signals input to the signal ports are signals related to the external devices. The control device 78 controls the signal ports based on control information stored in the storage device 73. The control unit 7 is an external signal control device to control the signals related to the external devices.

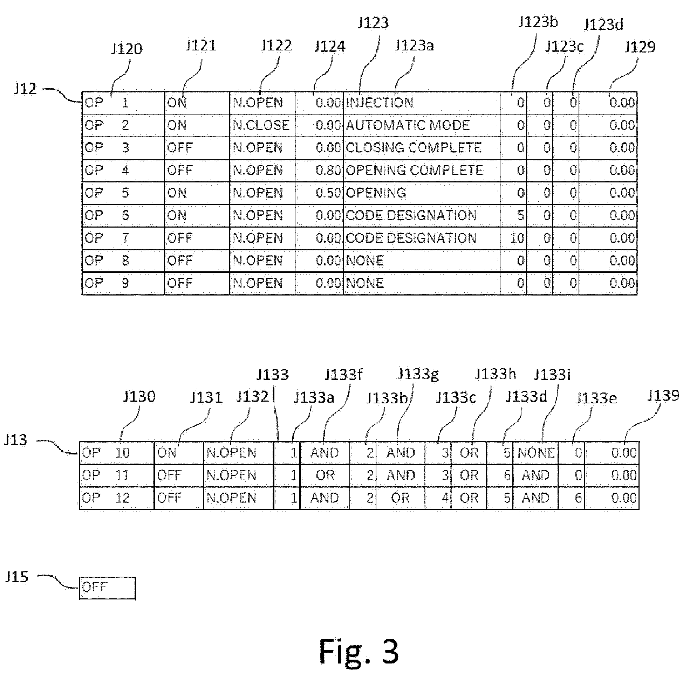

The storage device 73 stores control information J12 of each of the optional output signal ports OP1 through OP9, control information J13 of each of the optional output signal ports OP10 through OP12, and optional output holding information J15. FIG. 3 illustrates examples of the control information J12, the control information J13, and the optional output holding information J15.

The control information J12 of the optional output signal port OP1 includes name information J120, signal port use information J121, output signal setting information J122, output condition information J123, output delay time information J124, and repeat information J129.

What is set to the name information J120 is a name to identify the optional output signal port OP1.

What is set to the signal port use information J121 is information indicating whether to use the optional output signal port OP1. What is set to the signal port use information J121 is "ON" or "OFF". The indication "ON" refers to using the optional output signal port OP1, and the indication "OFF" refers to not using the optional output signal port OP1. The signal port use information J121 is a signal port use flag.

What is set to the output signal setting information J122 is information on assignment to the first signal and the second signal of the digital signal output from the optional output signal port OP1. What is set to the output signal setting information J122 is "N. OPEN (normally open)" or "N. CLOSE (normally close)". The output signal setting information J122 is an output inversion flag. Of the output signal setting information J122 is "N. OPEN", the output inversion flag is equivalent to OFF, the first signal is a condition establishment signal, and the second signal is a condition disestablishment signal. If the output signal setting information J122 is "N. CLOSE", the output inversion flag is equivalent to ON, the second signal is a condition establishment signal, and the first signal is a condition disestablishment signal.

What is set to the output condition information J123 is conditions to output the condition establishment signal from the optional output signal port OP1. The output condition information J123 includes a simplified condition information item J123a and detailed condition information items J123b through J123d. What is set to the simplified condition information item J123a is a condition with a relatively high frequency of use. The condition set to the simplified condition information item J123a is alone subjected to determination of condition establishment / condition disestablishment. What is set to the detailed condition information items J123b through J123d is numbers corresponding to the conditions (condition numbers). The conditions set to the detailed condition information items J123b through J123d are subjected to a disjunction operation (OR) to determine condition establishment / condition disestablishment based on the operation result.

What is set to the output delay time information J124 is a delay time from establishment of the conditions set to the output condition information J123 to output of a condition establishment signal.

What is set the repeat information J129 is information to alternately output a condition establishment signal and a condition disestablishment signal while the condition establishment signal is forcibly output from the optional output signal port OP1. Specifically, what is set to the repeat information J129 is duration of the condition establishment signal and the condition disestablishment signal. The repeat information J129 is invalid if "0" is set to the repeat information J129, and the repeat information J129 is valid if a value other than "0" is set.

The control information J12 of each of the optional output signal ports OP2 through OP9 also has the same configuration as the control information J12 of the optional output signal port OP1.

The control information J13 of the optional output signal port OP10 includes name information J130, signal port use information J131, output signal setting information J132, output condition information J133, and repeat information J139.

What is set to the name information J130, the signal port use information J131, the output signal setting information J132, and the repeat information J139 is the same kind of information as those to the name information J120, the signal port use information J121, the output signal setting information J122, and the repeat information J129 of the control information J12.

What is set to the output condition information J133 is conditions to output the condition establishment signal from the optional output signal port OP10. The output condition information J133 includes detailed condition information items J133a through J133e and operator information items J133f through J133i. What is set to the detailed condition information items J133a through J133e is numbers corresponding to the conditions (condition numbers). What is set to the operator information items J133f through J133i is any operator of "NONE", "AND", or "OR". The conditions set to the detailed condition information items J133a through J133e are subjected to logical operation by the operators set to the operator information items J133f through J133i for determining condition establishment / condition disestablishment based on the operation result. Note that, if "NONE" is set to the operator, the condition number and the operator set to the right of "NONE" in FIG. 3 are not used for the logical operation.

The control information J13 of each of the optional output signal ports OP11 and OP12 also has the same configuration as the control information J13 of the optional output signal port OP10.

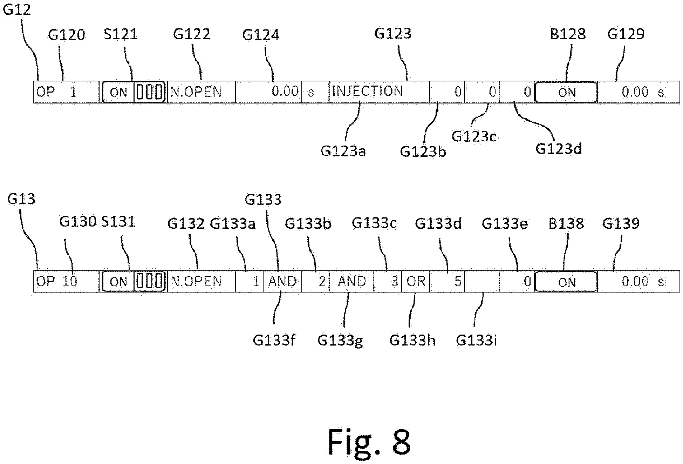

The optional output holding information J15 is information used in common for the optional output signal ports OP1 through OP12. What is set to the optional output holding information J15 is information on operation of buttons (forced output buttons B128, B138 illustrated in FIG. 8) for forcibly outputting the condition establishment signal from the optional output signal ports OP1 through OP12. What is set to the optional output holding information J15 is "ON" or "OFF". The optional output holding information J15 is an output hold flag.

If the optional output holding information J15 is "OFF", the forced output buttons B128 and B138 operate as push buttons. That is, the forced output buttons B128 and B138 are in a "pressed state" while being pressed (touched) and in a "released state" while not being pressed.

If the optional output holding information J15 is "ON", the forced output buttons B128 and B138 operate as toggle buttons. That is, the forced output buttons B128 and B138 alternately switch the "pressed state" and the "released state" every time being pressed.

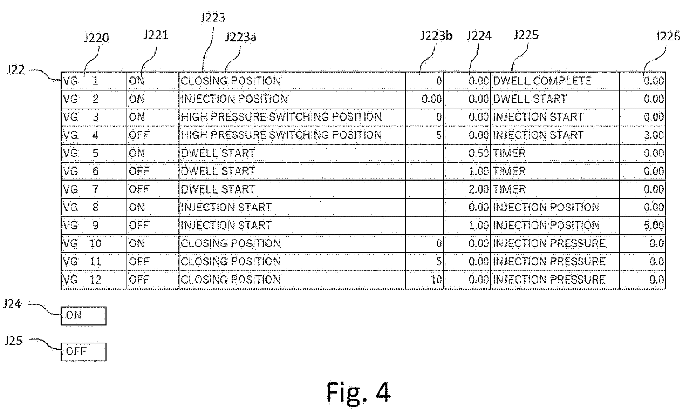

The storage device 73 stores control information J22, valve gate use information J24, and valve gate output holding information J25 of each of the valve gate output signal ports VG1 through VG12. FIG. 4 illustrates examples of the control information J22, the valve gate use information J24, and the valve gate output holding information J25.

The control information J22 of the valve gate output signal port VG1 includes name information J220, signal port use information J221, output starting condition information J223, output start delay time information J224, output stopping condition information J225, and output stop delay time information J226.

What is set to the name information J220 and the signal port use information J221 is the same kind of information as those to the name information J120 and the signal port use information J121 of the control information J12.

What is set to the output starting condition information J223 is conditions to start outputting the condition establishment signal from the valve gate output signal port VG1. The output starting condition information J223 includes a starting condition information item J223a and an auxiliary condition information J223b. What is set to the starting condition information item J223a is a starting condition. What is set to the auxiliary condition information J223b is auxiliary information on the starting condition information item J223a. For example, if "Opening Position" is set as the starting condition to the starting condition information item J223a, the position of the movable die plate 22 to be used as a condition determination threshold is set to the auxiliary condition information J223b. If "Injection Position" or "High Pressure Switching Position" is set as the starting condition to the starting condition information item J223a, a position of the screw 35 to be used as the condition determination threshold is set to the auxiliary condition information J223b. Note that "Injection Start" and "Dwell Start" as the starting condition are not associated with the auxiliary information.

What is set to the output start delay time information J224 is a delay time from establishment of the condition set to the output starting condition information J223 to start of output of the condition establishment signal.

What is set to the output stopping condition information J225 is conditions to stop outputting the condition establishment signal from the valve gate output signal port VG1.

What is set to the output stop delay time information J226 is a delay time from establishment of the condition set to the output stopping condition information J225 to stop of output of the condition establishment signal.

The control information J22 of each of the valve gate output signal ports VG2 through VG12 also has the same configuration as the control information J22 of the valve gate output signal port VG1.

The valve gate use information J24 is information used in common for the valve gate output signal ports VG1 through VG12. What is set to the valve gate use information J24 is information indicating whether to use the valve gate output signal ports VG1 through VG12. What is set to the valve gate use information J24 is "ON" or "OFF". The indication "ON" refers to using the valve gate output signal ports VG1 through VG12, and the indication "OFF" refers to not using the valve gate output signal ports VG1 through VG12. The valve gate use information J24 allows collective setting of use/disuse of the valve gate output signal ports VG1 through VG12.

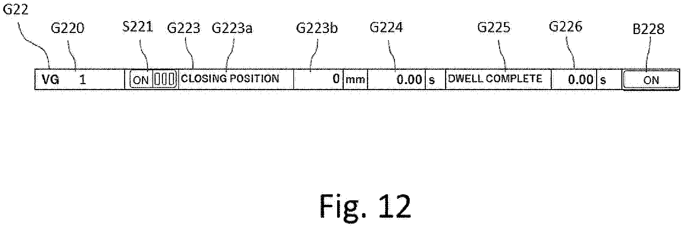

The valve gate output holding information J25 is information used in common for the valve gate output signal ports VG1 through VG12. What is set to the valve gate output holding information J25 is information on operation of buttons (forced output button B228 illustrated in FIG. 12) for forcibly outputting the condition establishment signal from the valve gate output signal ports VG1 through VG12. What is set to the valve gate output holding information J25 is the same kind of information as that to the optional output holding information J15.

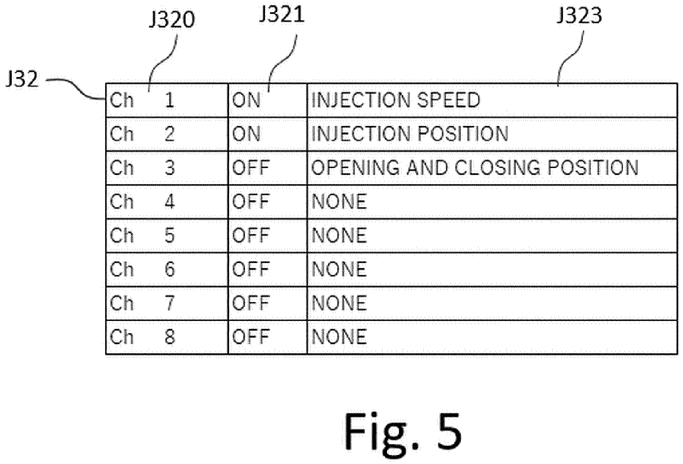

The storage device 73 stores control information J32 of each of analog output signal ports Ch1 through Ch8. FIG. 5 illustrates an example of the control information J32.

The control information J32 of the analog output signal port Ch1 includes name information J320, signal port use information J321, and output signal classification information J323.

What is set to the name information J320 and the signal port use information J321 is the same kind of information as those to the name information J120 and the signal port use information J121 of the control information J12.

What is set to the output signal classification information J323 is a signal classification to be output from the analog output signal port Ch1.

The control information J32 of each of the analog output signal ports Ch2 through Ch8 also has the same configuration as the control information J32 of the analog output signal port Ch1.

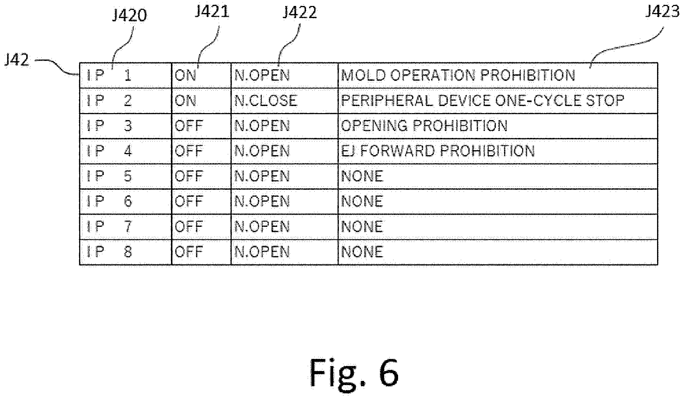

The storage device 73 stores control information J42 of each of optional input signal ports IP1 through IP8. FIG. 6 illustrates an example of the control information J42.

The control information J42 of the optional input signal port IP1 includes name information J420, signal port use information J421, input signal setting information J422, and operation information J423.

What is set to the name information J420, the signal port use information J421, and the input signal setting information J422 is the same kind of information as those to the name information J120, the signal port use information J121, and the output signal setting information J122 of the control information J12.

What is set to the operation information J423 is operation executed by the control device 78 when the condition establishment signal is input to the optional input signal port IP1.

The control information J42 of each of the optional input signal ports IP2 through IP8 also has the same configuration as the control information J42 of the optional input signal port IP1.

The control unit 7 has setting screens G1 through G4. The setting screen G1 is a screen to set the control information J12 and J13 and the optional output holding information J15. The setting screen G2 is a screen to set the control information J22, the valve gate use information J24, and the valve gate output holding information J25. The setting screen G3 is a screen to set the control information J32. The setting screen G4 is a screen to set the control information J42.

If a predetermined setting screen display operation is input to the input device 72, the control device 78 causes the setting screens G1 through G4 to be displayed on the display device 71. The operating personnel sets various kinds of information using the setting screens G1 through G4.

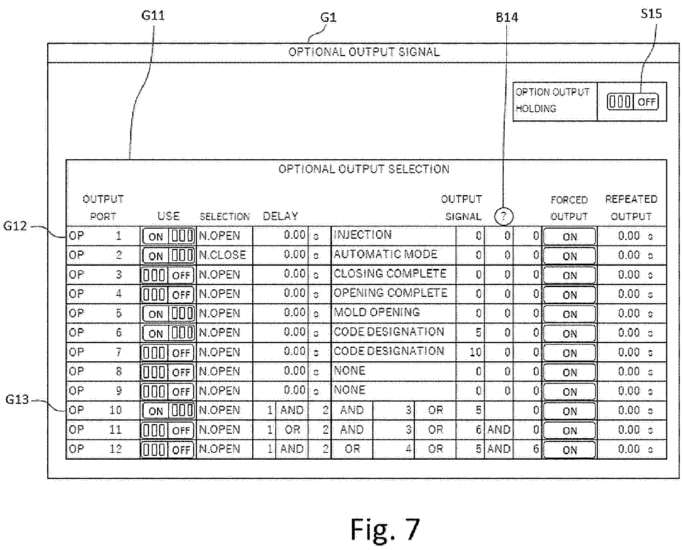

FIG. 7 illustrates an example of the setting screen G1. The setting screen G1 has a control information table G11 and an option output hold switch S15. The control information table G11 has nine first control information setting sections G12 corresponding to the optional output signal ports OP1 through OP9, three second control information setting sections G13 corresponding to the optional output signal ports OP10 through OP12, and a support information display button B14.

FIG. 8 illustrates an example of one of the first control information setting sections G12. The first control information setting section G12 includes a name display section G120, a use switch S121, an output signal setting section G122, an output condition setting section G123, an output delay time setting section G124, the forced output button B128, and a repeat setting section G129, which are displayed in alignment in a row from left to right. The first control information setting section G12 corresponds to the control information J12.

In the name display section G120, a name set to the name information J120 of the control information J12 is displayed by the control device 78. The name displayed in the name display section G120 may be a fixed name or may be set by operating personnel.

The use switch S121 is a software key to function as a slide switch (toggle switch). The control device 78 causes the use switch S121 reflecting the signal port use information J121 to be displayed. In addition, every time the use switch S121 is pressed (touched) by the operating personnel, the control device 78 alternately switches display (ON/OFF) of the use switch S121 and also causes information corresponding to the display of the use switch S121 to be stored as the signal port use information J121 in the storage device 73.

In the output signal setting section G122, information (N. OPEN/N. CLOSE) set to the output signal setting information J122 of the control information J12 is displayed by the control device 78.

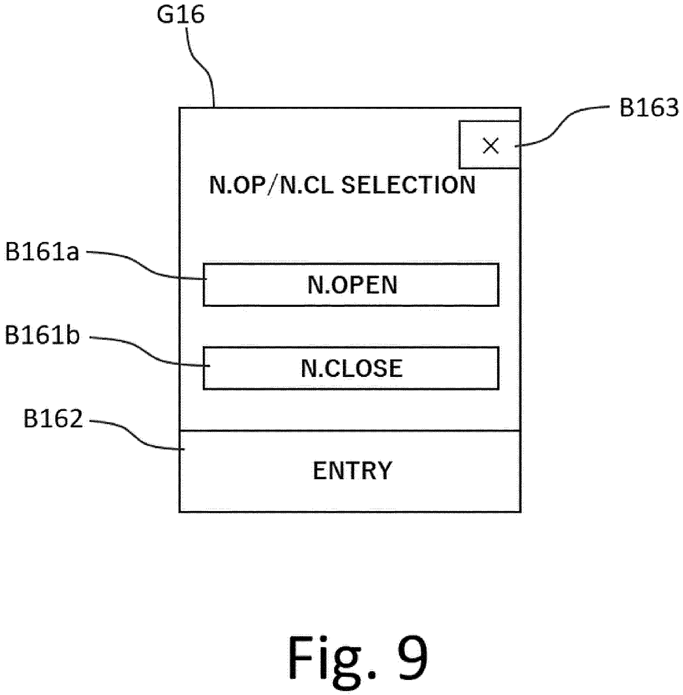

If the output signal setting section G122 is touched by the operating personnel, the control device 78 causes a selection screen G16 (N. OPEN/N. CLOSE selection screen) illustrated in FIG. 9 to be displayed over the setting screen G1 (pop-up display). The selection screen G16 has a plurality of selection buttons B161a and B161b, a confirmation button B162, and a screen clear button B163. To the selection buttons B161a and B161b, "N. OPEN" and "N. CLOSE" are assigned in order. If the confirmation button B162 is pressed after either the selection button B161a or B161b is pressed by the operating personnel, the control device 78 clears the selection screen G16 and causes the information assigned to the selection button pressed by the operating personnel to be displayed in the output signal setting section G122 and also causes the information to be stored as the output signal setting information J122 in the storage device 73. If the screen clear button B163 is pressed by the operating personnel, the control device 78 clears the selection screen G16 and maintains (does not change) the output signal setting information J122 and the display of the output signal setting section G122. The output signal setting information J122 is set using the selection screen G16.

In the output condition setting section G123, the conditions set to the output condition information J123 of the control information J12 are displayed by the control device 78. Specifically, the condition set to the simplified condition information item J123a is displayed in a simplified condition setting section G123a, and the conditions (condition numbers) set to the detailed condition information items J123b through J123d are displayed in detailed condition setting sections G123b through G123d. The detailed condition setting sections G123b through G123d are condition information setting sections.

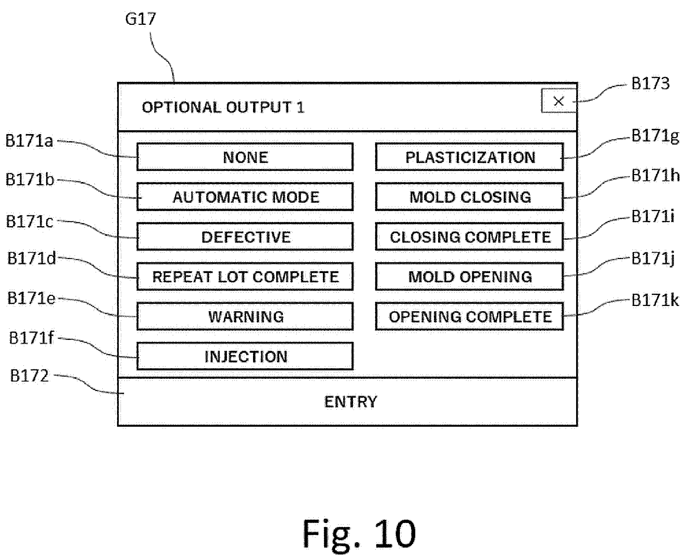

If the simplified condition setting section G123a is touched by the operating personnel, the control device 78 causes a selection screen G17 (optional output condition selection screen) illustrated in FIG. 10 to be displayed over the setting screen G1. The selection screen G17 has a plurality of selection buttons B171a through B171k, a confirmation button B172, and a screen clear button B173. To the selection buttons B171a through B171k, "None", "Automatic Mode", "Defective", "Repeat Lot Complete", "Warning", "Injection", "Plasticization", "Mold Closing", "Closing Complete", "Mold Opening", and "Opening Complete" are assigned in order. The operating personnel inputs operations similar to those to the selection screen G16 to the selection screen G17, and the control device 78 performs in accordance with the operations. The simplified condition information item J123a is set using the selection screen G17.

If the detailed condition setting sections G123b through G123d are touched by the operating personnel, the control device 78 causes a numeric keypad screen (not shown) to be displayed over the setting screen G1. The numeric keypad screen has numeric keys from 0 to 9 and a confirmation button and a screen clear button that are similar to those of the selection screen G16. The operating personnel inputs operations similar to those to the selection screen G16 to the numeric keypad screen, and the control device 78 performs in accordance with the operations. The detailed condition information items J123b through J123d are set using the numeric keypad screen. Note that, if a number other than "0" is set to any of the detailed condition information items J123b through J123d, the control device 78 causes "Code Designation" to be displayed in the simplified condition setting section G123a and also causes the "Code Designation" to be stored as the simplified condition information item J123a in the storage device 73.

In the output delay time setting section G124, the delay time set to the output delay time information J124 of the control information J12 is displayed by the control device 78. On the right of the output delay time setting section G124, the unit (s) of the delay time is displayed. The output delay time information J124 is set using the numeric keypad screen similar to the detailed condition information items J123b through J123d.

The forced output button B128 is a software key to function as a push button or a toggle button in accordance with the optional output holding information J15.

If the optional output holding information J15 is "OFF", the control device 78 causes the forced output button B128 to operate as a push button. Specifically, the control device 78 defines as a "pressed state" if the forced output button B128 is pressed (touched by a finger of the operating personnel) and defines as a "released state" if the forced output button B128 is not pressed (apart from the fingers of the operating personnel).

If the optional output holding information J15 is "ON", the control device 78 causes the forced output button B128 to operate as a toggle button. Specifically, the control device 78 alternately switches the "pressed state" and the "released state" every time the forced output button B128 is pressed.

In the repeat setting section G129, the duration set to the repeat information J129 of the control information J12 is displayed by the control device 78. On the right of the repeat setting section G129, the unit (s) of the duration is displayed. If the duration is other than "0", the control device 78 causes the forced output button B128 to be temporarily in the "released state" every time the "pressed state" continues for a fixed time. Specifically, if the "pressed state" continues for the time indicated by the duration, the control device 78 continues the "released state" for the time indicated by the duration and repeats these operations. If the duration is "0", the control device 78 does not perform the operation of temporarily causing the forced output button B128 to be in the "released state" from the "pressed state". That is, if the duration is "0", the control device 78 switches between the "pressed state" and the "released state" in accordance with the optional output holding information J15 and the operation input to the forced output button B128. The repeat information J129 is set using the numeric keypad screen similar to the detailed condition information items J123b through J123d.

FIG. 8 illustrates an example of one of the second control information setting section G13. The second control information setting section G13 includes a name display section G130, a use switch S131, an output signal setting section G132, an output condition setting section G133, the forced output button B138, and a repeat setting section G139, which are displayed in alignment in a row from left to right. The second control information setting section G13 corresponds to the control information J13.

The name display section G130, the use switch S131, the output signal setting section G132, the forced output button B138, and the repeat setting section G139 have the same configuration as the name display section G120, the use switch S121, the output signal setting section G122, the forced output button B128, and the repeat setting section G129 of the first control information setting section G12.

In the output condition setting section G133, the conditions set to the output condition information J133 of the control information J13 by the control device 78 are displayed. Specifically, the conditions set to the detailed condition information items J133a through J133e are displayed in detailed condition setting sections G133a through G133e, and the operators set to the operator information items J133f through J133i are displayed in operator setting sections G133f through G133i. Note that "None" for the operator is displayed as a blank.

The detailed condition information items J133a through J133e are set using the numeric keypad screen similar to the detailed condition information items J123b through J123d.

If the operator setting sections G133f through G133i are touched by the operating personnel, the control device 78 causes an operator selection screen (not shown) to be displayed over the setting screen G1. The operator selection screen has three selection buttons assigned to "None", "AND", and "OR" and a confirmation button and a screen clear button that are similar to those of the selection screen G16. The operating personnel inputs operations similar to those to the selection screen G16 to the operator selection screen, and the control device 78 performs in accordance with the operations. The operator information items J133f through J133i are set using the operator selection screen.

The support information display button B14 is a software key to function as a push button. The support information display button B14 is arranged above the first control information setting sections G12 of the optional output signal port OP1. If the support information display button B14 is pressed by the operating personnel, the control device 78 causes a support information screen (not shown) to be displayed over the setting screen G1. The support information screen is a screen to support setting of the detailed condition information items J123b through J123d. In the support information screen, a plurality of conditions and condition numbers corresponding to the respective conditions are displayed in alignment. The support information screen is a condition display screen.

The option output hold switch S15 is a software key to function as a slide switch (toggle switch). The control device 78 causes the option output hold switch S15 reflecting the optional output holding information J15 to be displayed. Every time the option output hold switch S15 is pressed by the operating personnel, the control device 78 alternately switches the display (ON/OFF) of the option output hold switch S15 and also causes the information corresponding to the display of the option output hold switch S15 to be stored as the optional output holding information J15 in the storage device 73.

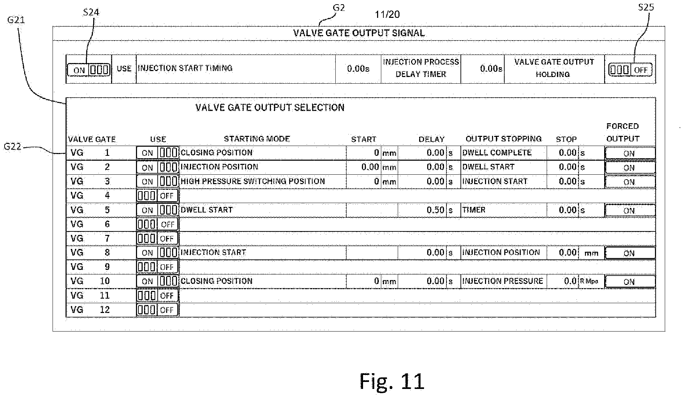

FIG. 11 illustrates an example of the setting screen G2. The setting screen G2 has a control information table G21, a valve gate use switch S24, and a valve gate output holding switch S25. The control information table G21 has 12 control information setting sections G22 corresponding to the valve gate output signal ports VG1 through VG12.

FIG. 12 illustrates an example of one of the control information setting sections G22. The control information setting section G22 includes a name display section G220, a use switch S221, an output starting condition setting section G223, an output start delay time setting section G224, an output stopping condition setting section G225, an output stop delay time setting section G226, and the forced output button B228, which are displayed in alignment in a row from left to right. The control information setting sections G22 corresponds to the control information J22.

The name display section G220, the use switch S221, and the forced output button B228 have the same configuration as the name display section G120, the use switch S121, and the forced output button B128 of the first control information setting section G12. The output start delay time setting section G224 and the output stop delay time setting section G226 have the same configuration as the output delay time setting section G124 of the first control information setting section G12.

In the output starting condition setting section G223, the conditions set to the output starting condition information J223 of the control information J22 are displayed by the control device 78. Specifically, the condition (starting condition) set to the starting condition information item J223a is displayed in a starting condition setting section G223a, and the information (auxiliary information) set to the auxiliary condition information J223b is displayed in an auxiliary condition setting section G223b. On the right of the auxiliary condition setting section G223b, the unit (mm) of the auxiliary information is displayed as needed.

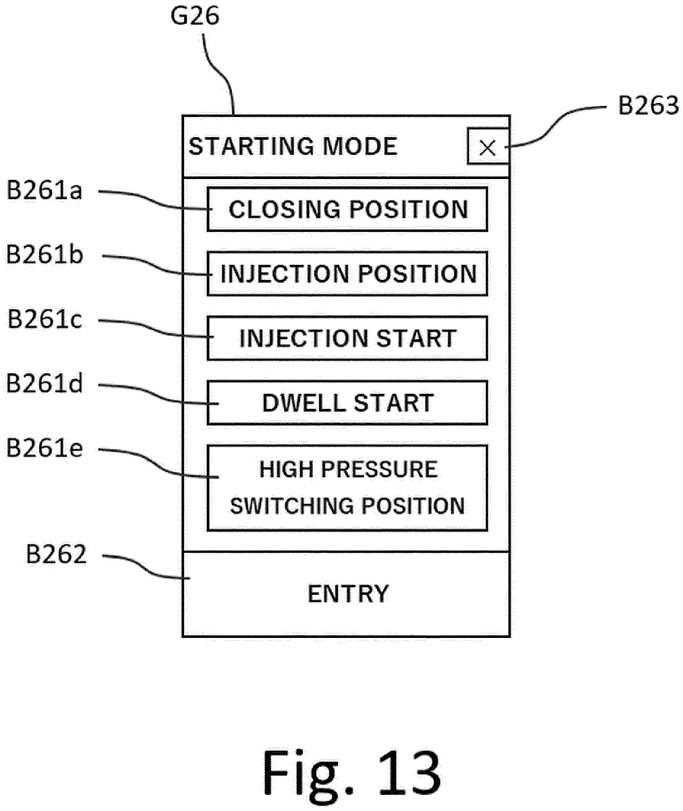

If the starting condition setting section G223a is touched by the operating personnel, the control device 78 causes a selection screen G26 (starting condition selection screen) illustrated in FIG. 13 to be displayed over the setting screen G2. The selection screen G26 has a plurality of selection buttons B261a through B261e, a confirmation button B262, and a screen clear button B263. To the selection buttons B261a through B261e, "Closing Position", "Injection Position", "Injection Start", "Dwell Start", and "High Pressure Switching Position" are assigned in order. The operating personnel inputs operations similar to those to the selection screen G16 to the selection screen G26 and the control device 78 performs in accordance with the operations. The starting condition information item J223a is set using the selection screen G26. in addition, the auxiliary condition information J223b is set using the numeric keypad screen similar to the detailed condition information items J123b through J123d.

In the output stopping condition setting section G225, the condition set to the output stopping condition information J225 of the control information J22 is displayed by the control device 78.

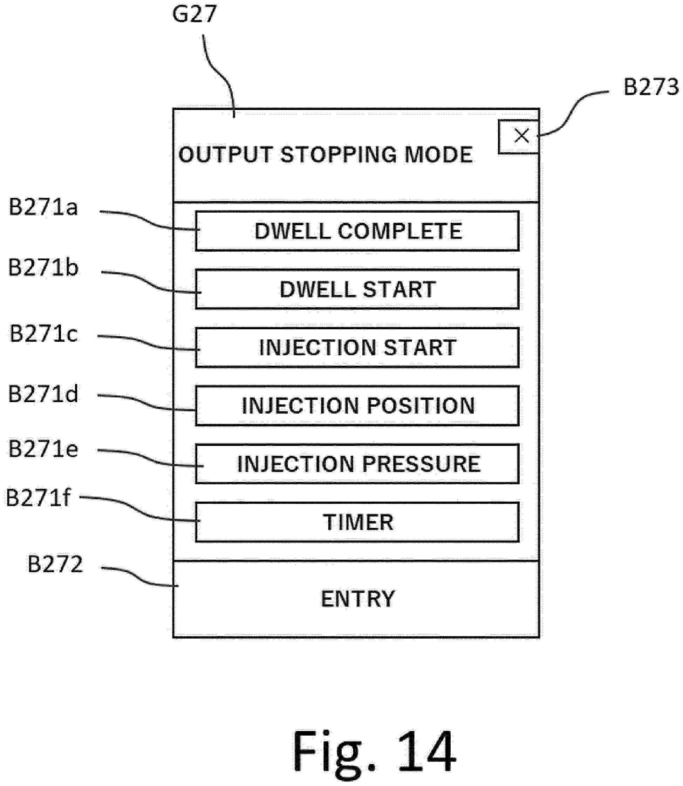

If the output stopping condition setting section G225 is touched by the operating personnel, the control device 78 causes a selection screen G27 (stopping condition selection screen) illustrated in FIG. 14 to be displayed over the setting screen G2. The selection screen G27 has a plurality of selection buttons B271a through B271f, a confirmation button B272, and a screen clear button B273. To the selection buttons B271a through B271f, "Dwell Complete", "Dwell Start", "Injection Start", "Injection Position", "Injection Pressure", and "Timer" are assigned in order. The operating personnel inputs operations similar to the selection screen G16 to the selection screen G27, and the control device 78 performs in accordance with the operations. The output stopping condition setting section G225 is set using the selection screen G27.

Note that, if the display of the use switch S221 is "OFF" in the control information setting section G22, the control device 78 causes the output starting condition setting section G223, the output start delay time setting section G224, the output stopping condition setting section G225, the output stop delay time setting section G226, and the forced output button B228 not to be displayed and causes them to be blanks.

The valve gate use switch S24 is a software key to function as a slide switch (toggle switch). The control device 78 causes the valve gate use switch S24 reflecting the valve gate use information J24 to be displayed. Every time the valve gate use switch S24 is pressed by the operating personnel, the control device 78 alternately switches the display (ON/OFF) of the valve gate use switch S24 and also causes the information corresponding to the display of the valve gate use switch S24 to be stored as the valve gate use information J24 in the storage device 73.

The valve gate output holding switch S25 is a software key to function as a slide switch (toggle switch). The control device 78 causes the valve gate output holding switch S25 reflecting the valve gate output holding information J25 to be displayed. Every time the valve gate output holding switch S25 is pressed by the operating personnel, the control device 78 alternately switches the display (ON/OFF) of the valve gate output holding switch S25 and also causes the information corresponding to the display of the valve gate output holding switch S25 to be stored as the valve gate output holding information J25 in the storage device 73.

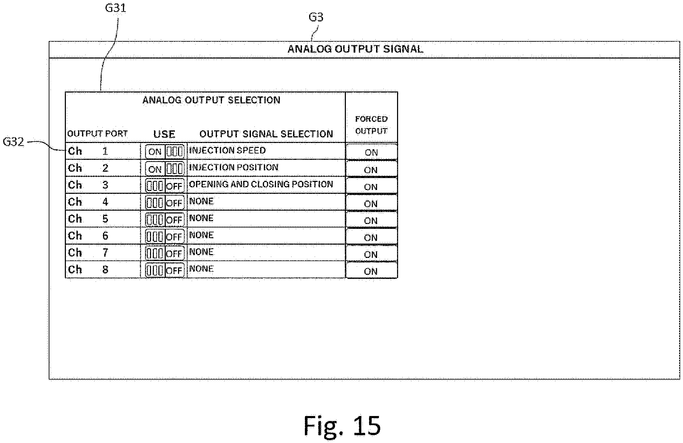

FIG. 15 illustrates an example of the setting screen G3. The setting screen G3 has a control information table G31. The control information table G31 has eight control information setting sections G32 corresponding to the analog output signal ports Ch1 through Ch8.

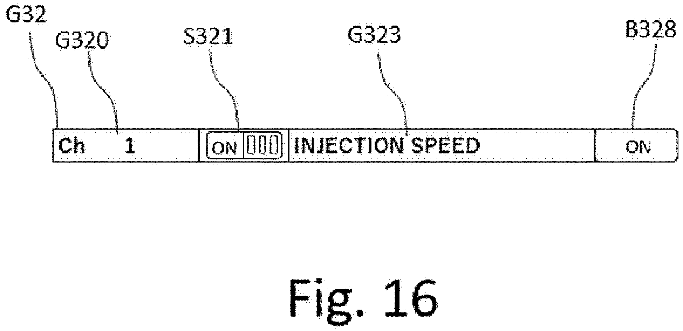

FIG. 16 illustrates an example of one of the control information setting sections G32. The control information setting section G32 includes a name display section G320, a use switch S321, an output signal classification setting section G323, and a forced output button B328, which are displayed in alignment in a row from left to right. The control information setting section G32 corresponds to the control information J32.

The name display section G320, the use switch S321, and the forced output button B328 have the same configuration as the name display section G120, the use switch S121, and the forced output button B128 of the first control information setting section G12.

In the output signal classification setting section G323, the control device 78 causes the signal classification set to the output signal classification information J323 of the control information J32 to be displayed.

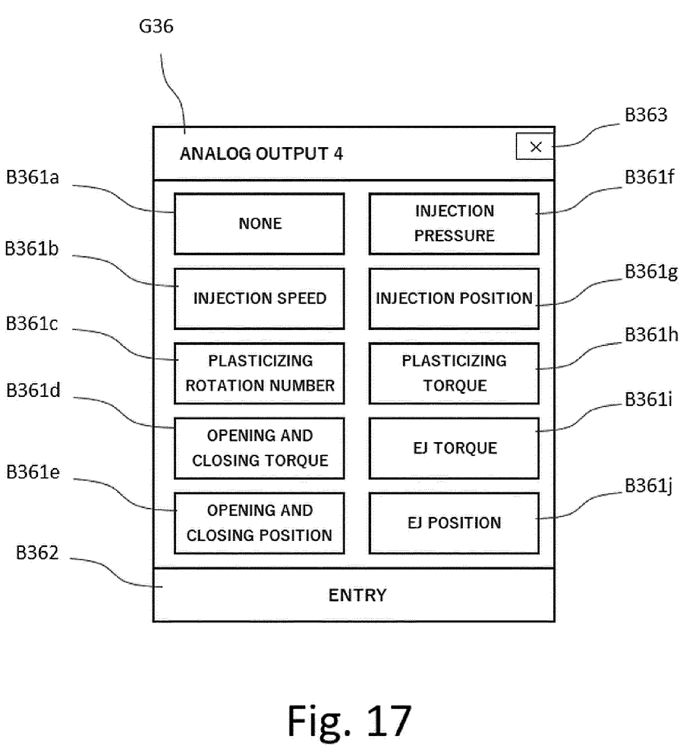

If the output signal classification setting section G323 is touched by the operating personnel, the control device 78 causes a selection screen G36 (analog output signal classification selection screen) illustrated in FIG. 17 to be displayed over the setting screen G3. The selection screen G36 has a plurality of selection buttons B361a through B361j, a confirmation button B362, and a screen clear button B363. To the selection buttons B361a through B361j, "None", "Injection Speed", "Plasticizing Rotation Number", "Opening and Closing Torque", "Opening and Closing Position", "Injection Pressure", "Injection Position", "Plasticizing Torque", "EJ Torque", and "EJ position" are assigned in order. The operating personnel inputs operations similar to the selection screen G16 to the selection screen G36, and the control device 78 performs in accordance with the operations. The output signal classification information J323 is set using the selection screen G36.

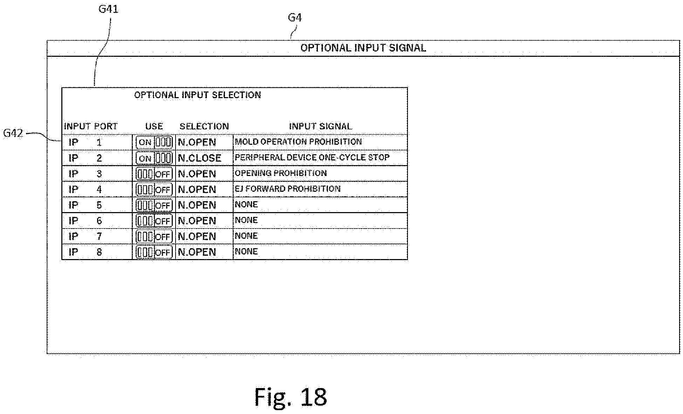

FIG. 18 illustrates an example of the setting screen G4. The setting screen G4 has a control information table G41. The control information table G41 has eight control information setting sections G42 corresponding to the optional input signal ports IP1 through IP8.

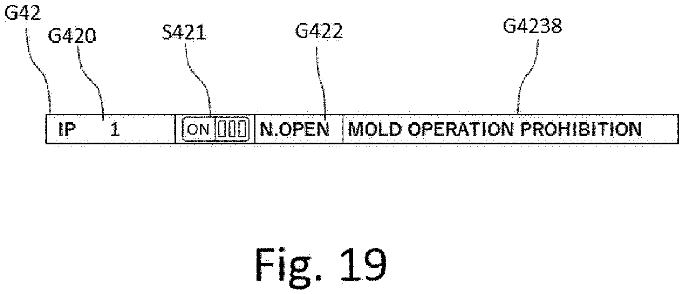

FIG. 19 illustrates an example of one of the control information setting sections G42. The control information setting section G42 includes a name display section G420, a use switch S421, an input signal setting section G422, and an operation setting section G423, which are displayed in alignment in a row from left to right. The control information setting section G42 corresponds to the control information J42.

The name display section G420, the use switch S421, and the input signal setting section G422 have the same configuration as the name display section G120, the use switch S121, and the output signal setting section G122 of the first control information setting section G12.

In the operation setting section G423, the control device 78 causes the operation set to the operation information J423 of the control information J42 to be displayed.

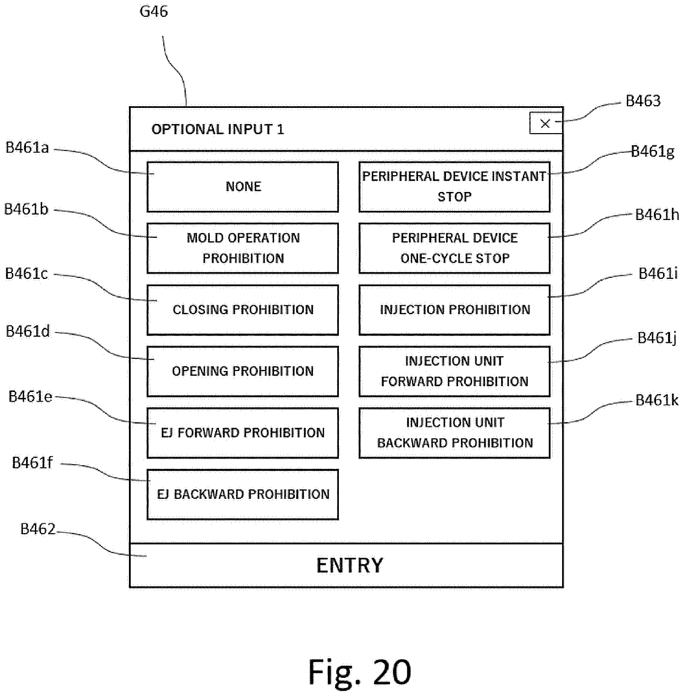

If the operation setting section G423 is touched by the operating personnel, the control device 78 causes a selection screen G46 (operation selection screen) illustrated in FIG. 20 to be displayed over the setting screen G4. The selection screen G46 has a plurality of selection buttons B461a through B461k, a confirmation button B462, and a screen clear button B463. To the selection buttons B461a through B461k, "None", "Mold Operation Prohibition", "Closing Prohibition", "Opening Prohibition", "EJ Forward Prohibition", "EJ Backward Prohibition", "Peripheral Device Instant Stop", "Peripheral Device One-Cycle Stop", "Injection Prohibition", "Injection Unit Forward Prohibition", and "Injection Unit Backward Prohibition" are assigned in order. The operating personnel inputs operations similar to the selection screen G16 to the selection screen G46, and the control device 78 performs in accordance with the operations. The operation information J423 is set using the selection screen G46.

Then, a description is given to an example of signal port control operation executed by the control device 78. The control device 78 is a signal port control device.

The control device 78 controls the optional output signal port OP1 based on the control information J12 of the optional output signal port OP1 and the optional output holding information J15.

If the output signal setting information J122 is "N. OPEN", the control device 78 causes the first signal to be output from the optional output signal port OP1 to be the condition establishment signal and the second signal to be the condition disestablishment signal. If the output signal setting information J122 is "N. CLOSE", the control device 78 causes the second signal output from the optional output signal port OP1 to be the condition establishment signal and the first signal to be the condition disestablishment signal.

If the signal port use information J121 is "ON", the control device 78 determines whether the condition set to the output condition information J123 is established. When the delay time has elapsed set to the output delay time information J124 after establishment of the condition, the control device 78 then causes the condition establishment signal to be output from the optional output signal port OP1. If the condition is not established, the control device 78 causes the condition disestablishment signal to be output from the optional output signal port OP1. That is, if the signal port use information J121 is "ON", the control device 78 controls the optional output signal port OP1 based on the output condition information J123.

If the signal port use information J121 is "OFF", the control device 78 causes the second signal (L level) to be output from the optional output signal port OP1 on a regular basis. That is, if the signal port use information J121 is "OFF", the control device 78 controls the optional output signal port OP1 to not function.

If the optional output holding information J15 is "OFF", the control device 78 causes the forced output button B128 to operate as a push button. If the optional output holding information J15 is "ON", the control device 78 causes the forced output button B128 to operate as a toggle button.

If the forced output button B128 of the optional output signal port OP1 displayed on the setting screen G1 is in the "pressed state", the control device 78 causes the condition establishment signal to be output. If the forced output button B128 is in the "released state" and the signal port use information J121 is "ON", the control device 78 causes the condition establishment signal or the condition disestablishment signal to be output in accordance with the output condition information J123. That is, even when the forced output button B128 is in the "released state", the control device 78 causes the condition establishment signal to be output if the signal port use information J121 is ON and the condition set to the output condition information J123 is established, and causes the condition disestablishment signal to be output if the condition is not established. When the setting screen G1 is displayed, the control device 78 may cause the condition disestablishment signal to be output on a regular basis if the forced output button B128 is in the "released state".

When the duration of the repeat information J129 is other than "0", the control device 78 continues the "released state" for the time indicated by the duration if the "pressed state" continues for the time indicated by the duration and repeats these operations. For example, if the duration is "three seconds", the control device 78 continues the "pressed state" for three seconds and continues the "released state" for three seconds to alternately repeat the "pressed state" and the "released state" for three seconds each until the forced output button B128 is operated to be in the "released state". Thus, the condition establishment signal and the condition disestablishment signal are alternately output for three seconds each from the optional output signal port OP1.

The control device 78 controls the optional output signal ports OP2 through OP9 in the same manner as the optional output signal port OP1. The control device 78 also controls the optional output signal ports OP10 through OP12 in the same manner as the optional output signal port OP1.

The control device 78 controls the valve gate output signal port VG1 based on the control information J22 of the valve gate output signal port VG1, the valve gate use information J24, and the valve gate output holding information J25.

If the valve gate use information J24 is "ON", the control device 78 controls the valve gate output signal ports VG1 through VG12 based on the control information J22 of the valve gate output signal ports VG1 through VG12. If the valve gate use information J24 is "OFF", the control device 78 causes the second signal (L level) to be output from the valve gate output signal ports VG1 through VG12 on a regular basis. That is, if the valve gate use information J24 is "OFF", the control device 78 controls the valve gate output signal ports VG1 through VG12 to not function.

The control device 78 defines the first signal output from the valve gate output signal port VG1 as the condition establishment signal and defines the second signal as the condition disestablishment signal.

If the signal port use information J221 is "ON", the control device 78 determines whether the starting conditions set to the output starting condition information J223 and the stopping condition set to the output stopping condition information J225 are established. When the delay time set to the output start delay time information J224 has elapsed after the establishment of the starting conditions, the control device 78 then causes the condition establishment signal to be output from the valve gate output signal port VG1. When the delay time set to the output stop delay time information J226 has elapsed after the establishment of the stopping condition, the control device 78 causes the condition disestablishment signal to be output from the valve gate output signal port VG1. That is, if the signal port use information J221 is "ON", the control device 78 controls the valve gate output signal port VG1 based on the output condition information (output starting condition information J223, output stopping condition information J225).

If the signal port use information J221 is "OFF", the control device 78 causes the second signal (L level) to be output from the valve gate output signal port VG1 on a regular basis. That is, if the signal port use information J221 is "OFF", the control device 78 controls the valve gate output signal port VG1 to not function.

If the valve gate output holding information J25 is "OFF", the control device 78 causes the forced output button B228 to operate as a push button. If the valve gate output holding information J25 is "ON", the control device 78 causes the forced output button B228 to operate as a toggle button.

If the forced output button B228 of the valve gate output signal port VG1 displayed on the setting screen G2 is in the "pressed state", the control device 78 causes the condition establishment signal to be output. If the forced output button B228 is in the "released state" and the signal port use information J221 is "ON", the control device 78 causes the condition establishment signal or the condition disestablishment signal to be output in accordance with the output condition information (output starting condition information J223, output stopping condition information J225).

The control device 78 controls the valve gate output signal ports VG2 through VG12 in the same manner as the valve gate output signal port VG1.

The control device 78 controls the analog output signal port Ch1 based on the control information J32 of the analog output signal port Ch1.

If the signal port use information J321 is "ON", the control device 78 causes a signal related to the signal classification set to the output signal classification information J323 to be output from the analog output signal port Ch1. That is, if the signal port use information J321 is "ON", the control device 78 controls the analog output signal port Ch1 based on the output condition information (output signal classification information J323).

If the signal port use information J321 is "OFF", the control device 78 causes a lower limit voltage (e.g., 0 V) in a voltage range to be output from the analog output signal port Ch1 on a regular basis. That is, if the signal port use information J321 is "OFF", the control device 78 controls the analog output signal port Ch1 to not function.

The control device 78 causes the forced output button B328 of the analog output signal port Ch1 displayed on the setting screen G3 to operate as a push button. If the forced output button B328 is in the "pressed state", the control device 78 causes an upper limit voltage (e.g., 10 V) in the voltage range to be output. If the forced output button B328 is in the "released state" and the signal port use information J321 is "ON", the control device 78 causes the signal related to the signal classification set to the output signal classification information J323 to be output. When the setting screen G3 is displayed, the control device 78 may cause the lower limit voltage (e.g., 0 V) in the voltage range to be output on a regular basis if the forced output button B328 is in the "released state".

The control device 78 controls the analog output signal ports Ch2 through Ch8 in the same manner as the analog output signal port Ch1.

The control device 78 controls the optional input signal port IP1 based on the control information J42 of the optional input signal port IP1.

If the input signal setting information J422 is "N. OPEN", the control device 78 defines the first signal input to the optional input signal port IP1 as the condition establishment signal and defines the second signal as the condition disestablishment signal. If the input signal setting information J422 is "N. CLOSE", the control device 78 defines the second signal input to the optional input signal port IP1 as the condition establishment signal and defines the first signal as the condition disestablishment signal.

If the signal port use information J421 is "ON" and the condition establishment signal is input to the optional input signal port IP1, the control device 78 performs the operation set to the operation information J423. If the signal port use information J421 is "ON" and the condition disestablishment signal is input to the optional input signal port IP1, the control device 78 does not perform the operation set to the operation information J423.

If the signal port use information J421 is OFF, the control device 78 causes the condition disestablishment signal to be input to the optional input signal port IP1 on a regular basis. That is, if the signal port use information J421 is "OFF", the control device 78 controls the optional input signal port IP1 to not function.

The control device 78 controls the optional input signal ports IP2 through IP8 in the same manner as the optional input signal port IP1.

As described above, the injection molding machine 1 has the molding machine body 10 to mold molded articles and the control unit 7. The control unit 7 is the external signal control device used for a molding machine. The control unit 7 has the optional output signal port OP1 to be connected to an external device, the storage device 73 configured to store the control information J12 of the optional output signal port OP1, and the control device 78. The control information J12 includes the signal port use information J121 and the output condition information J123. If the signal port use information J121 is "ON", the control device 78 controls the optional output signal port OP1 based on the output condition information J123. If the signal port use information J121 is "OFF", the control device 78 controls the optional output signal port OP1 so as to cause the optional output signal port OP1 to not function.

With such a configuration, if the connection between an external device and the optional output signal port OP1 is released, turning "OFF" of the signal port use information J121 allows the optional output signal port OP1 to not function while the output condition information J123 is held in the storage device 73. In addition, if the external device and the optional output signal port OP1 are connected again, turning "ON" of the signal port use information allows the optional output signal port OP1 to be controlled based on the output condition information J123 stored in the storage device 73. Thus, the setting operations are simplified for connecting an external device, having been connected once, again to the injection molding machine 1.

In addition, the optional output signal port OP1 is an output signal port configured to output a digital signal. The control information J12 includes the output signal setting information J122. If the output signal setting information J122 is "N. OPEN", the control device 78 defines the first signal of a digital signal as the condition establishment signal and defines the second signal of the digital signal as the condition disestablishment signal, and if the output signal setting information J122 is "N. CLOSE", defines the second signal as the condition establishment signal and defines the first signal as the condition disestablishment signal. If the condition related to the output condition information J123 is established, the control device 78 causes the condition establishment signal to be output from the optional output signal port OP1, and if the condition related to the output condition information J123 is not established, causes the condition disestablishment signal to be output from the optional output signal port OP1. That is, if the output signal setting information J122 is "N. CLOSE", the control device 78 causes the signal that is supposed to be output from the optional output signal port OP1 for the output signal setting information J122 of "N. OPEN" to be inverted and output from the optional output signal port OP1. In such a manner, it is possible to readily invert the condition establishment signal and the condition disestablishment signal output from the optional output signal port OP1 in accordance with the setting of the output signal setting information J122. Thus, for example, even if there are both an external device using the first signal as the condition establishment signal and an external device using the second signal as the condition establishment signal, either external device may be connected to the optional output signal port OP1 without separately adding a signal inverter circuit.

The control unit 7 has the input device 72 configured to input operations by the operating personnel. The input device 72 has the forced output button B128 corresponding to the optional output signal port OP1. The storage device 73 is configured to store the optional output holding information J15. If the optional output holding information J15 is OFF, the control device 78 defines the state of the forced output button B128 while the forced output button B128 is pressed as the "pressed state" and defines the state of the forced output button B128 while the forced output button B128 is not pressed as the "released state". If the optional output holding information J15 is "ON", the control device 78 defines and holds the state of the forced output button B128 as the "pressed state" when the forced output button B128 is pressed while the state of the forced output button B128 is in the "released state". If the forced output button B128 is pressed while the state of the forced output button B128 is in the "pressed state", the control device 78 defines and holds the state of the forced output button B128 as the "released state". If the state of the forced output button B128 is in the "pressed state" or if the condition related to the output condition information J123 is established, the control device 78 causes the condition establishment signal to be output from the optional output signal port OP1. If the state of the forced output button B128 is in the "released state" and also the condition related to the output condition information J123 is not established, the control device 78 causes the condition disestablishment signal to be output from the optional output signal port OP1. In such a manner, an operation of the forced output button B128 by the operating personnel allows the condition establishment signal to be forcibly output from the optional output signal port OP1. In addition, turning the optional output holding information J15 "ON" allows the condition establishment signal to be held in the state of being output from the optional output signal port OP1 without continuously pressing the forced output button B128 by the operating personnel. Thus, the operating personnel is allowed to readily check output of the condition establishment signal from the optional output signal port OP1. Note that the optional output holding information J15 may be omitted from the control unit 7.

The control information J12 also includes the repeat information J129. If other than "0" is set to the repeat information J129 as the duration, the control device 78 causes the state of the forced output button B128 to be temporarily in the "released state" every time the "pressed state" continues for a fixed time. Thus, the condition establishment signal and the condition disestablishment signal are automatically and alternately output in a repeated manner from 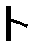 from the optional output signal port OP1. Accordingly, the operating personnel is allowed to readily check output of the condition establishment signal and the condition disestablishment signal from the optional output signal port OP1.

The control unit 7 also has the display device 71 configured to display the setting screen G1 to set the control information J12. The setting screen G1 has the first control information setting sections G12 to which the output condition information J123 of the control information J12 is input. To the detailed condition setting sections G123b through G123d of the first control information setting sections G12, condition numbers corresponding to the conditions related to the output condition information J123 are allowed to be input. The input device 72 has the support information display button B14. If the support information display button B14 is pressed, the control device 78 causes the support information screen to be displayed on the display device 71, the screen indicating the correspondence between the conditions to be set to the output condition information J123 and their condition numbers. In such a manner, the operating personnel is allowed to readily check the condition number corresponding to the condition set to the output condition information J123.

In addition, the optional input signal port IP1 is the input signal port configured to input the digital signal. The storage device 73 stores the control information J42 of the optional input signal port IP1. The control information J42 includes the input signal setting information J422 as an input inversion flag and the operation information J423. If the input signal setting information J422 is "N. OPEN" (the input inversion flag is OFF), the control device 78 defines the first signal of the digital signal as the condition establishment signal and defines the second signal of the digital signal as the condition disestablishment signal. If the input signal setting information J422 is "N. CLOSE" (the input inversion flag is ON), the control device 78 defines the second signal as the condition establishment signal and defines the first signal as the condition disestablishment signal. The control device 78 operates in accordance with the operation information J423 if the condition establishment signal is input to the optional input signal port IP1, and does not operate in accordance with the operation information J423 if the condition disestablishment signal is input to the optional input signal port IP1. In such a manner, it is possible to readily invert the condition establishment signal and the condition disestablishment signal input to the optional input signal port IP1 in accordance with the setting of the input signal setting information J422. Thus, for example, even if there are both an external device using the first signal as the condition establishment signal and an external device using the second signal as the condition establishment signal, either external device may be connected to the optional input signal port IP1 without separately adding a signal inverter circuit.

Although the injection molding machine according to one embodiment of the present invention has been described herein, the present invention is not limited to the injection molding machine. Embodiments of the present invention are also applicable to other kinds of molding machine, such as a die casting machine.

The above description has been given to some embodiments of the present invention, but embodiments of the present invention are not limited to these examples. The scope of the present invention also includes the embodiments described above appropriately subjected to addition, cancellation, design change of any of the components by those skilled in the art and appropriate combinations of the features of the embodiments as long as not departing from the spirit of the present invention.

## Claims

1. An external signal control device used for a molding machine, the control device comprising: a signal port configured to be connected to an external device; a storage device configured to store control information of the signal port; and a signal port control device, wherein
the control information includes a signal port use flag and condition information, and
the signal port control device
controls the signal port based on the condition information if the signal port use flag is ON, and
controls the signal port so as to cause the signal port to not function if the signal port use flag is OFF.

2. The external signal control device according to Claim 1, wherein
the signal port is an output signal port configured to output a digital signal,
the control information further includes an output inversion flag, and
the signal port control device
defines a first signal of the digital signal as a condition establishment signal and defines a second signal of the digital signal as a condition disestablishment signal if the output inversion flag of the control information is OFF,
defines the second signal as the condition establishment signal and defines the first signal as the condition disestablishment signal if the output inversion flag of the control information is ON,
causes the condition establishment signal to be output from the output signal port if a condition related to the condition information is established, and
causes the condition disestablishment signal to be output from the output signal port if the condition related to the condition information is not established.

3. The external signal control device according to Claim 1, further comprising an input device configured to input an operation, wherein
the signal port is an output signal port configured to output a digital signal,
one of a first signal or a second signal of the digital signal is a condition establishment signal and another is a condition disestablishment signal,
the input device has a forced output button corresponding to the output signal port, and
the signal port control device
defines a state of the forced output button while the forced output button is pressed as a pressed state and defines a state of the forced output button while the forced output button is not pressed as a released state,
causes the condition establishment signal to be output from the output signal port if the state of the forced output button is in the pressed state or if a condition related to the condition information is established, and
causes the condition disestablishment signal to be output from the output signal port if the state of the forced output button is in the released state and the condition related to the condition information is not established.

4. The external signal control device according to Claim 1, further comprising an input device configured to input an operation, wherein
the signal port is an output signal port configured to output a digital signal,
one of a first signal or a second signal of the digital signal is a condition establishment signal and another is a condition disestablishment signal,
the input device has a forced output button corresponding to the output signal port,
the storage device stores an output hold flag,
the signal port control device
defines a state of the forced output button while the forced output button is pressed as a pressed state and defines a state of the forced output button while the forced output button is not pressed as a released state if the output hold flag is OFF,
holds the state of the forced output button as the pressed state when the forced output button is pressed in the released state and holds the state of the forced output button as the released state when the forced output button is pressed in the pressed state if the output hold flag is ON,
causes the condition establishment signal to be output from the output signal port if the state of the forced output button is in the pressed state or if a condition related to the condition information is established, and
causes the condition disestablishment signal to be output from the output signal port if the state of the forced output button is in the released state and the condition related to the condition information is not established.

5. The external signal control device according to Claim 3 or 4, wherein
the control information further includes repeat information, and
the signal port control device causes the state of the forced output button to be temporarily in the released state every time the pressed state continues for a fixed time while the repeat information is valid.

6. The external signal control device according to Claim 1, further comprising: a display device configured to display a setting screen to set the control information; and an input device configured to input an operation, wherein
the setting screen has a condition information setting section configured to input the condition information,
the condition information setting section allows a condition number corresponding to the condition related to the condition information to be input,
the input device has a support information display button, and
the signal port control device causes a condition display screen indicating correspondence between the condition and the condition number to be displayed on the display device if the support information display button is pressed.

7. The external signal control device according to Claim 1, wherein
the signal port is an input signal port configured to input a digital signal,
the control information includes operation information instead of the condition information and further includes an input inversion flag, and
the signal port control device
defines a first signal of the digital signal as a condition establishment signal and defines a second signal of the digital signal as a condition disestablishment signal if the input inversion flag of the control information is OFF,
defines the second signal as the condition establishment signal and defines the first signal as the condition disestablishment signal if the input inversion flag of the control information is ON,
operates in accordance with the operation information if the condition establishment signal is input to the input signal port, and
does not operates in accordance with the operation information if the condition disestablishment signal is input to the input signal port.

8. A molding machine, comprising: a molding machine body configured to mold a molded article; and the external signal control device according to Claim 1.
